# EUROPÄISCHE PATENTSCHRIFT

(11) **EP 4 260 035 B1**
(45) Veröffentlichungstag und Bekanntmachung des Hinweises auf die Patenterteilung: **21.01.2026**
(21) Anmeldenummer: 21823207.2
(22) Anmeldetag: 26.11.2021
(51) Int. Cl.: G01L 13/02, G01L 19/00, G01L 19/06

(54) **KOPLANARER DIFFERENZDRUCKMESSAUFNEHMER**
COPLANAR DIFFERENTIAL PRESSURE TRANSDUCER
TRANSDUCTEUR DE PRESSION DIFFÉRENTIELLE COPLANAIRE

(30) Priorität: 14.12.2020 DE 102020133349
(43) Veröffentlichungstag der Anmeldung: 18.10.2023
(73) Patentinhaber: Endress+Hauser SE+Co. KG, 79689 Maulburg (DE)
(72) Erfinder: UEHLIN, Thomas, 79650 Schopfheim (DE); HÜGEL, Michael, 77656 Offenburg (DE); GUTMANN, Florian, 79244 Münstertal (DE)
(74) Vertreter: Endress + Hauser Group Services (Deutschland) AG+Co. KG
(86) Internationale Anmeldenummer: PCT/EP2021/083082
(87) Internationale Veröffentlichungsnummer: WO 2022/128397

(56) Entgegenhaltungen:
- EP-A1- 2 901 124
- DE-A1- 102012 113 042
- DE-A1- 102014 102 719
- US-A- 4 745 810
- US-A1- 2010 307 254

## Beschreibung

Die Erfindung betrifft einen koplanaren Differenzdruckmessaufnehmer. Bevorzugt wird der erfindungsgemäße Differenzdruckmessaufnehmer im Bereich der Automatisierungstechnik eingesetzt.

Wesentliche Komponenten von Differenzdruckmessgeräten sind ein Messwerk und eine Wandlerkammer, in der eine Differenzdruckmesszelle mit einem drucksensitiven Element angeordnet ist. Differenzdruckmessgeräte dienen insbesondere zur kontinuierlichen Messung von Druckdifferenzen in Messmedien, z.B. in Flüssigkeiten, Dämpfen, Gasen und Stäuben. Aus dem Differenzdruck kann z.B. der Füllstand eines Füllguts in einem Behälter oder der Durchfluss eines Messmediums durch eine Rohrleitung ermittelt werden.

Als drucksensitives Element wird üblicherweise ein Silizium-Chip verwendet. Um eine gute Messempfindlichkeit zu erreichen, arbeitet ein Differenzdruckmessaufnehmer bevorzugt in einem Bereich, der in der Nähe eines kritischen Grenzwertes für den Druck (Nenndruck) liegt. Wird der kritische Grenzwert überschritten, besteht die Gefahr, dass der Chip zerstört wird. Da insbesondere Silizium-Chips eine relativ geringe Überlastfestigkeit aufweisen, ist einem Differenzdruckmessaufnehmer üblicherweise ein Überlastschutz zugeordnet. Dieser ist bevorzugt so ausgestaltet, dass er die Messempfindlichkeit und die Messgenauigkeit des drucksensitiven Elements möglichst wenig beeinträchtigt.

Aus der WO 2018/165122 A1 ist ein koplanar aufgebauter Differenzdruckmessaufnehmer bekannt geworden, bei dem die Druckeingänge mit Trennmembrane und Überlastmembrane in einer Ebene - und zwar in dem dem Prozess zugewandten Endbereich - angeordnet sind. Es handelt sich um ein sog. Doppelmembransystem. Der koplanare Differenzdruckmessaufnehmer ist so ausgestaltet, dass er an eine standardisierte 3051 Schnittstelle angeschlossen werden kann.

Aus dem Stand der Technik sind die US 4 745 810 A, die EP 2 901 124 A1, die DE 10 2014 102719 A1, die DE 10 2012 113042 A1 und die US 2010/307254 A1 bekannt geworden.

Die US 4 745 810 A offenbart einen isolierten Drucktransmitter, der direkt an eine Industrienorm-Verschraubung bzw. Schnittstelle angeschlossen wird. Die EP 2 901 124 A1 offenbart ein Verfahren zum Befüllen eines Drucksensormoduls eines Prozessdruck-Transmitters. Die DE 10 2014 102719 A1 offenbart einen Differenzdruckmessaufnehmer. Die DE 10 2012 113042 A1 offenbart ein hydraulisches Messwerk zum Aufnehmen von Differenzdrücken und die US 2010/307254 A1 offenbart einen Druckmessumformer und Flanschkupplung für die industrielle Prozesssteuerung.

Der Erfindung liegt die Aufgabe zugrunde, einen Differenzdruckmessaufnehmer vorzuschlagen, der an unterschiedliche Kundenanschlüsse adaptierbar ist.

Die Aufgabe wird gelöst durch einen koplanaren Differenzdruckmessaufnehmer mit einem Messwerk mit zwei dem Prozess zugewandten Trennmembranen und einer Wandlerkammer, wobei an den Trennmembranen zwei Drücke anliegen, die hydraulisch über ein entsprechendes Kapillarsystem zu einem drucksensitiven Messelements, das in der Wandlerkammer angeordnet ist, übertragen werden. Das Messwerk ist in seinem dem Prozess zugewandten Endbereich als Prozessanschlusses für eine Hardware-Schnittstelle eines Kundenanschlusses ausgestaltet. In der dem Prozess zugewandten Stirnfläche des Grundkörpers des Prozessanschlusses ist vor jeder der beiden Trennmembranen eine scheibenförmige Ausnehmung vorgesehen. Jede der beiden scheibenförmigen Ausnehmungen weist jeweils die Form von zwei sich in einer ellipsoiden Struktur schneidenden Kreisen mit unterschiedlichen Radien auf. Es sind zwei zu den ellipsoiden scheibenförmigen Ausnehmungen in Form und Dimensionen an die ellipsoiden scheibenförmigen Ausnehmungen angepasste Einlagescheiben mit einer Öffnung, über die die Drücke zu den Trennmembranen gelangen, vorgesehen. Diese sind in den ellipsoiden scheibenförmigen Ausnehmungen montierbar und so ausgestaltet, dass der Prozessanschluss an die Hardware-Schnittstelle des Kundenanschlusses adaptierbar ist.

Gemäß einer Weiterbildung sind zumindest zwei Paare von unterschiedlichen Einlagescheiben vorgesehen, die so ausgestaltet sind, dass der Prozessanschluss an zumindest zwei unterschiedliche Hardware-Schnittstellen, insbesondere an zumindest zwei unterschiedliche Standard-Hardware-Schnittstellen, von entsprechenden Kundenanschlüssen montierbar ist.

Darüber hinaus wird vorgeschlagen, dass die ellipsoiden scheibenförmigen Ausnehmungen und die korrespondierenden Einlagescheiben so dimensioniert sind, dass die umlaufenden Schweißnahten zur Montage der Einlagescheiben in den ellipsoiden scheibenförmigen Ausnehmungen außerhalb der Trennmembranen liegen. Bevorzugt sind die beiden ellipsoiden scheibenförmigen Ausnehmungen vollsymmetrisch zueinander angeordnet.

Weiterhin wird vorgeschlagen, dass die beiden ellipsoiden scheibenförmigen Ausnehmungen so angeordnet sind, dass sie mit den beiden größer dimensionierten Radien nebeneinander liegen, während sie mit den beiden kleiner dimensionierten Radien zu zwei gegenüberliegenden Außenkanten des Prozessanschlusses ausgerichtet sind.

Im Zusammenhang mit der Erfindung ist vorgesehen, dass sich bei zwei zu einer ersten Hardware-Schnittstelle korrespondierenden Einlagescheiben die bevorzugt kreisförmige Öffnung jeweils im Bereich des größer dimensionierten Radius' befindet. Bei der ersten Hardware-Schnittstelle handelt es sich bevorzugt um eine 3051-Schnittstelle.. Hier ist auch vorgesehen, dass um jede der beiden kreisförmigen Öffnungen eine umlaufende, ringförmige Nut angeordnet ist. Diese dient zur Aufnahme einer Dichtung. Bei der zweiten Hardware-Schnittstelle kann es sich z.B. um eine IEC-Schnittstelle handeln. Hier ist vorgesehen, dass sich bei zwei zu einer ersten Hardware-Schnittstelle korrespondierenden Einlagescheiben die bevorzugt kreisförmige Öffnung jeweils im Bereich des kleiner dimensionierten Radius' befindet.

Eine weitere Ausgestaltung der erfindungsgemäßen koplanaren Differenzdrucksensors sieht vor, dass die ellipsoiden scheibenförmigen Ausnehmungen mit korrespondierenden Blind-Einlegscheiben verschlossen werden. Durch Befestigen der Blind-Einlegescheiben in den ellipsoiden Ausnehmungen werden diese Zugänge druck- und gasdicht verschlossen. Die zu messenden Drücke gelangen z.B. über seitlich geführte Bohrungen am Prozessanschluss zu der jeweiligen Trennmembran.

Die Erfindung wird anhand der nachfolgenden Figuren näher erläutert. Es zeigt:
Fig. 1: teilweiser Längsschnitt durch einen Differenzdruckmessaufnehmer, der die wesentlichen Komponenten zeigt,
Fig. 1a: in Teilen eine Explosionsdarstellung des in Fig. 1 gezeigten Differenzdruckmessaufnehmers,
Fig. 2a: einen Ausschnitt eines Längsschnittes durch einen schematisch dargestellten Differenzdruckmessaufnehmer mit erfindungsgemäßem koplanarem Adapter,
Fig. 3a: eine Draufsicht auf die untere Stirnseite des Prozessadapters,
Fig. 3b: eine skizzierte Darstellung der Lage der scheibenförmigen Ausnehmungen mit den Einlegescheiben für eine Kundenschnittstelle (3051),
Fig. 3c: eine skizzierte Teildarstellung der Lage der scheibenförmigen Ausnehmungen mit der linken Einlegescheibe für eine weitere Kundenschnittstelle (IEC),
Fig. 3d: eine Draufsicht auf die Stirnseite des Prozessadapters mit Einlegescheiben für die weitere in Fig. 3c dargestellte Kundenschnittstelle,
Fig. 4: eine schematische Darstellung eines koplanaren Differenzdruckmessaufnehmers mit Überlastschutz, bei dem der erfindungsgemäße koplanare Adapter zum Einsatz kommen kann.

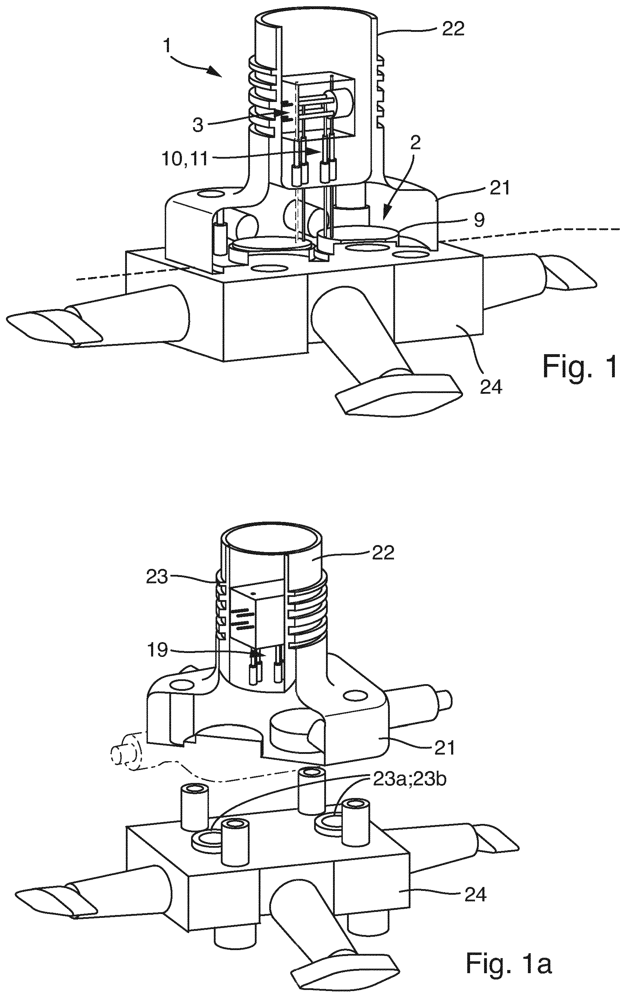

Fig. 1 zeigt eine perspektivische Ansicht eines Differenzdruckmessaufnehmers 1, wobei einige der im Innenraum angeordneten Komponenten infolge eines Teil-Längsschnitts zu sehen sind. Fig. 1a zeigt den in Fig. 1 dargestellten Differenzdruckmessaufnehmer 1 in teilweiser Explosionsdarstellung.

Der Differenzdruckmessaufnehmer 1 besteht aus einer druck- bzw. gasdichten Einheit, die aus dem Prozessanschluss 21 und dem Gehäuseadapter 22 gebildet ist. Wesentliche Komponenten des Differenzdruckmessaufnehmer 1 sind das in dem Prozessanschluss 21 integrierte Messwerk 2 und eine Wandlerkammer 3, in der sich eine Differenzdruckmesszelle 12 mit einem drucksensitiven Messelement 13 befindet.

In einem dem Prozess zugewandten Bereich des Messwerks 2 sind zwei in einer Ebene nebeneinanderliegende, also koplanare Trennmembranen 5a, 5b vorgesehen. An den Trennmembranen 5a, 5b liegen während des Messbetriebs des Differenzdruckmessaufnehmers 1 die Drücke p1, p2 an, deren Differenz dp gemessen bzw. bestimmt werden soll. Die Druckzufuhr erfolgt über den Kundenanschluss/Ventilblock 24, der die Kunden-Schnittstellen 23a, 23b aufweist. Diese Kundenschnittstellen 23a, 23b können je nach verwendetem Standard in Durchmesser und relativem Abstand zueinander variieren. Bekannte Standards sind beispielsweise der vorwiegend in den USA verwendete 3051 Standard für den Anschluss von Drucksensoren oder der in weiten Teilen der Welt verwendete IEC Standard. So haben bei dem 3051-Standard die Kunden-Schnittstellen 23a, 23b einen kleineren relativen Abstand zueinander und einen größeren Durchmesser als dies bei den Kunden-Schnittstellen 23a, 23b des IEC-Standards der Fall ist.

Von den Trennmembranen 5a, 5b werden die beiden Drücke p1, p2 hydraulisch über ein entsprechendes Kapillarsystem 10a, 10b, 11a, 11b zu zwei gegenüberliegenden Druckbeaufschlagungsflächen 13a, 13b des drucksensitiven Messelements 13 geleitet. Bei dem Kapillarsystem kann es sich um Kapillarbohrungen in einem Grundkörper 9, z.B. den Grundkörpern 9 von Messwerk 2 und Wandlerkammer 3, oder auch in einem Zwischenkörper handeln. Alternativ kann das Kapillarsystem bei einer abgesetzten Variante von Messwerk und Wandlerkammer zumindest teilweise auch aus Kapillarröhrchen bestehen. Das Messwerk 2 ist symmetrisch, bevorzugt vollsymmetrisch, ausgestaltet. Dies bringt erhebliche Vorteile bei der Fertigung mit sich.

Um den Druckmessaufnehmer 1 und der Kundenanschluss 24 miteinander über nicht dargestellte Bolzen zu verbinden, ist das Messwerk 2 in seinem dem Prozess zugewandten Endbereich als Prozessanschluss 21 ausgestaltet. Mittels des erfindungsgemäßen koplanaren Adapters, der an bzw. in dem dem Prozess zugewandten Endbereich des Prozessanschlusses 21 vorgesehen ist, ist es nun auf einfache Art und Weise möglich, einen Standard-Prozessanschluss 21 an unterschiedliche Kundenanschlüsse 24a, 24b anzupassen bzw. zu adaptieren.

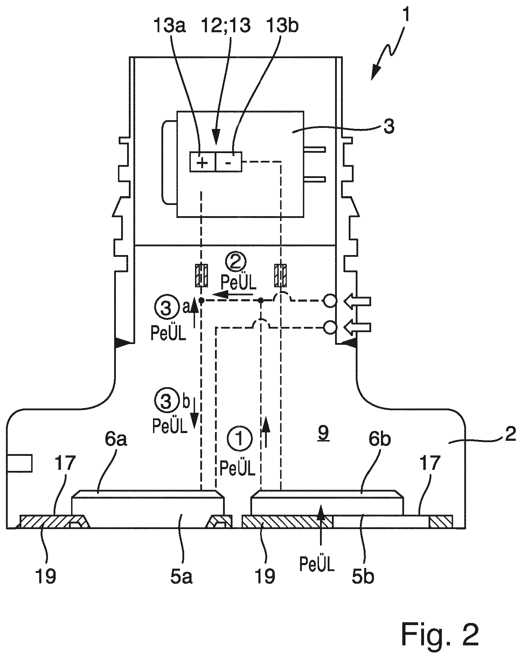

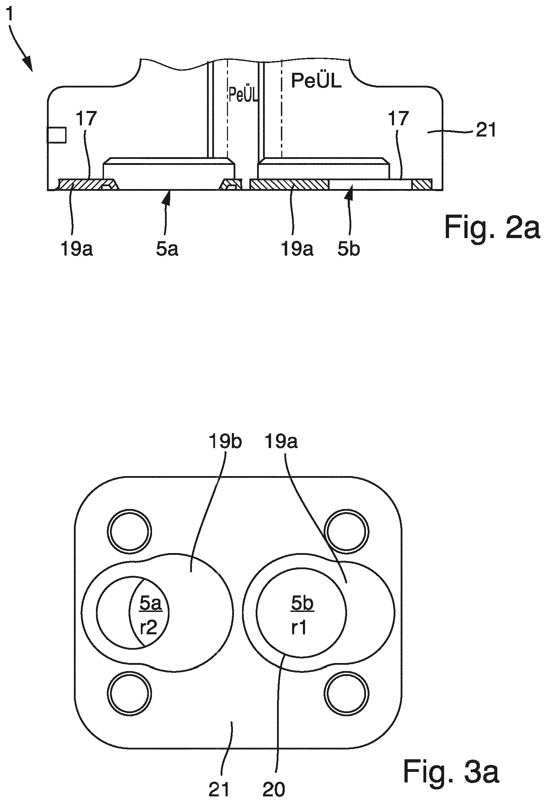

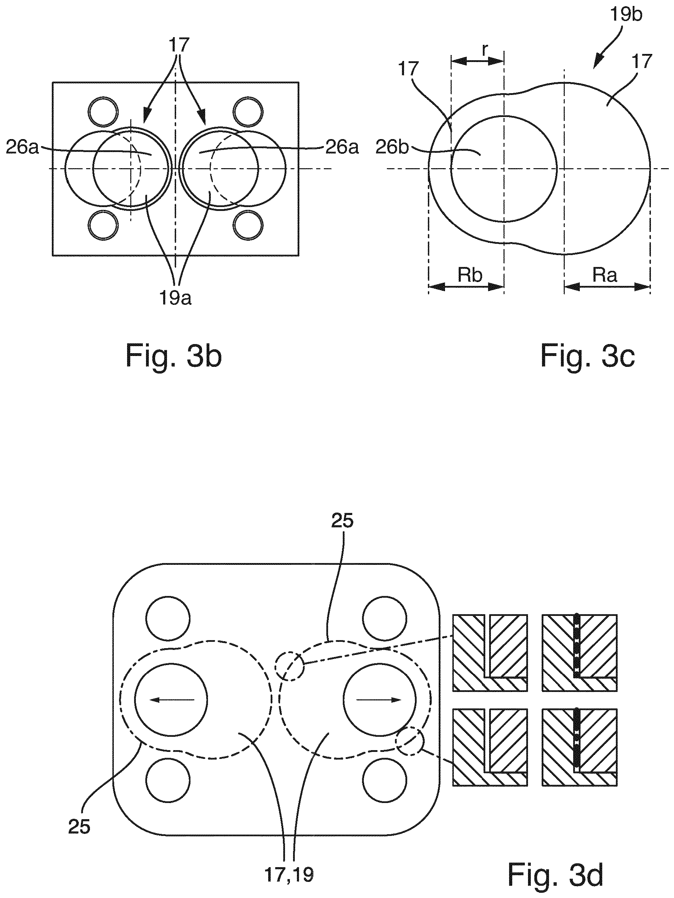

Der koplanare Adapter zur Anpassung eines Standard-Prozessadapters 21 an unterschiedliche Kundenschnittstellen 24a, 24b ist in den Figuren Fig. 2a und Fig. 3a-d in unterschiedlichen Ausgestaltungen und Darstellungen zu sehen. Fig. 2a zeigt einen Längsschnitt durch den dem Prozess zugewandten Endbereich des Prozessanschlusses 21. In einem dem Prozess zugewandten Bereich der Stirnfläche des Grundkörpers 9 des Prozessanschlusses 21 ist vor jeder der beiden Trennmembranen 5a, 5b eine scheibenförmige Ausnehmung 17 vorgesehen. Jede der beiden scheibenförmigen Ausnehmungen 17 hat jeweils die Form von zwei sich in einer ellipsoiden Struktur schneidenden Kreisen mit unterschiedlichen Radien Ra; Rb. In die beiden ellipsoiden scheibenförmigen Ausnehmungen 17 sind korrespondierende Einlagescheiben 19a oder 19b eingefügt, die eine Öffnung 26a bzw. 26b aufweisen. Über diese Öffnungen 26a; 26b gelangen die Drücke p1, p2 zu den Trennmembranen 5a, 5b. Korrespondierende Einlegescheiben 19a, 19b bedeutet, dass die Einlegescheiben 19a, 19b in Form und Dimensionen an die ellipsoiden scheibenförmigen Ausnehmungen 17 angepasst sind. Gut zu sehen ist dies beispielhaft in Fig. 3a und Fig. 3d. Die Einlegescheiben 19a, 19b sind so ausgestaltet, dass der Prozessanschluss 21 an die Hardware-Schnittstelle 23a; 23b des Kundenanschlusses 24a; 24b adaptierbar ist.

Zu jedem Kundenanschluss 24a, 24b gibt es ein passendes Paar von Einlagescheiben 19a, 19b, über die der Prozessanschluss 21 an zumindest zwei unterschiedliche Hardware-Schnittstellen 23a, 23b von entsprechenden Kundenanschlüssen 24a, 24b montierbar ist. Da auch die Kundenanschlüsse 24a, 24b weitgehend standardisiert sind, genügt es, zwei Kundenanschlüsse 24a, 24b explizit zu nennen: den 3051- Standard und den IEC-Standard. Beide wurden zuvor bereits erwähnt und näher beschrieben

Die für den Kundenanschluss 24a, 24b erforderlichen Einlegescheiben 19a, 19b sind so in die ellipsoiden scheibenförmigen Ausnehmungen 17 montiert, dass die umlaufenden Schweißnahten 25 zur Montage der Einlagescheiben 19a; 19b in den ellipsoiden scheibenförmigen Ausnehmungen 17 außerhalb der Trennmembranen 5a, 5b liegen. Dies ist wichtig, damit die Funktion der Trennmembranen 5a, 5b nicht durch die Temperatureinwirkung während des Schweißprozesses beeinträchtigt wird. Gut zu sehen ist er Verlauf der Schweißnähte in Fig. 3d.

Die beiden ellipsoiden scheibenförmigen Ausnehmungen 17 ebenso wie die gewählten Einlegescheiben 19a; 19b sind vollsymmetrisch zueinander angeordnet.

In Fig. 3b ist zu sehen, dass die beiden ellipsoiden scheibenförmigen Ausnehmungen 17 so angeordnet sind, dass sie mit den beiden größer dimensionierten Radien Ra nebeneinander liegen, während sie mit den beiden kleiner dimensionierten Radien Rb zu zwei gegenüberliegenden Außenkanten des Prozessanschlusses 21 ausgerichtet sind. Die bevorzugt kreisförmige Öffnung 26a befindet sich jeweils im Bereich des größer dimensionierten Radius' Ra. Die Maße der Ausnehmungen 17 und insbesondere der Einlegescheiben 19a sind so gewählt, dass der Prozessanschluss 21 an eine Hardware-Schnittstelle 23a anschließbar ist, bei der es sich um eine 3051-Schnittstelle handelt. Jede der beiden kreisförmigen Öffnungen 26a, die einen Radius r1 aufweist, ist von einer umlaufenden, ringförmigen Nut 20 umgeben. Diese dient zur Aufnahme von einer Dichtung bzw. von Dichtmaterial.

In Fig. 3c ist die linke Ausnehmung 17 und eine zu einer anderweitigen Hardware-Schnittstelle 23b korrespondierenden Einlagescheiben 19b dargestellt. Die rechte Ausnehmung mit der Einlagescheibe 19b ist koplanar hierzu angeordnet, in der Fig. 3c aber nicht dargestellt. Hier befindet sich die bevorzugt kreisförmige Öffnung 26b im Bereich des kleiner dimensionierten Radius' Rb der Einlegescheibe 19b. Die kreisförmige Öffnung hat einen Radius r2. Bevorzugt sind die Einlegescheiben 19b so ausgestaltet, das der Prozessadapter 21 an einen Kundenanschluss 24 nach dem IEC-Standard angedockt werden kann.

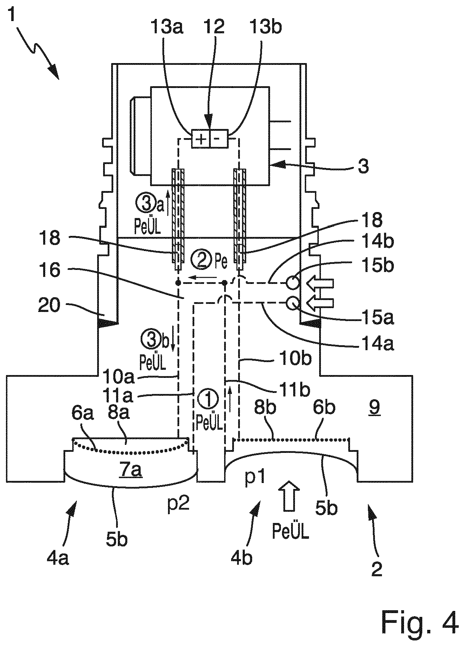

In Fig. 4 ist eine bevorzugte Ausgestaltung eines speziellen Differenzdruckmessaufnehmers 1 mit Überlastschutz dargestellt, bei dem der koplanare Adapter 17, 19a; 19b zum Einsatz kommen kann. Es versteht sich von selbst, dass der erfindungsgemäße Adapter mit jeder beliebigen Ausgestaltung eines koplanaren Differenzdruckmessaufnehmers 1 verwendbar ist; er ist nicht auf die nachfolgend beschriebene Ausgestaltung beschränkt. Der Differenzdruckmessaufnehmer 1 dient zur Bestimmung des Differenzdrucks von zwei Drücken p1, p2. Zur Anwendung kommt die Messung des Differenzdruckes zweier Drücke p1, p2 z.B. in einer Rohrleitung zur Durchflussbestimmung. Ein weiterer Anwendungsfall eines Differenzdruckmessaufnehmers 1 ist beispielsweise die Bestimmung des Füllstandes eines in einem Tank befindlichen fluiden Mediums.

Der Differenzdruckmessaufnehmer 1 besteht aus einem Messwerk 2 und einer Wandlerkammer 3. An oder in einem dem Prozess zugewandten Endbereich des Messwerks 2 ist ein koplanares Doppelmembransystem mit zwei Doppelmembranen 4a, 4b vorgesehen. Das Messwerk 2 ist in dem Prozessanschluss 21 angeordnet. In der Wandlerkammer 3 ist eine Differenzdruckmesszelle 12 mit einem drucksensitiven Element 13 angeordnet. Die Wandlerkammer 3 befindet sich in dem Gehäuseadapter 22. Wandlerkammer 3 und Messwerk 2 sind im gezeigten Fall voneinander abgesetzt, die Kapillarbohrungen von Messwerk 2 und Wandlerkammer 3 sind über Kapillarröhrchen miteinander verbunden.

Die beiden Doppelmembranen 4a, 4b bestehen jeweils aus einer Prozessmembrane 5a, 5b bzw. einer Trennmembrane 5a, 5b und einer in Richtung der Druckwirkung hinter der Trennmembrane 5a, 5b angeordneten Überlastmembrane 6a, 6b. Zwischen der ersten Trennmembrane 5a und der ersten Überlastmembrane 6a ist eine erste Druckkammer 7a und zwischen der ersten Überlastmembrane 6a und dem Grundkörper 9 eine erste Zusatzdruckkammer 8a bzw. Überdruckkammer 8a ausgebildet. Weiterhin ist zwischen der zweiten Trennmembrane 5b und der zweiten Überlastmembrane 6b eine zweite Druckkammer 7b und zwischen der zweiten Überlastmembrane 6b und dem Grundkörper 9 eine zweite Zusatzdruckkammer 8b bzw. eine zweite Überdruckkammer 8b ausgebildet.

Der ersten Zusatzdruckkammer 8a ist eine erste Verbindungskapillare 10a und der zweiten Zusatzdruckkammer 8b ist eine zweite Verbindungskapillare 10b zugeordnet. Der ersten Druckkammer 7a ist eine erste Hilfskapillare 11a zugeordnet. Der zweiten Druckkammer 7b ist eine zweite Hilfskapillare 11b zugeordnet. Die druckübertragende Kopplung/Kreuzung zwischen der ersten Hilfskapillare 11a und der zweiten Verbindungskapillare 10b bzw. zwischen der zweiten Hilfskapillare 11b und der ersten Verbindungskapillare 10a ist bei der gezeigten Ausgestaltung in dem Messwerk 2 realisiert. Alternativ kann sie - wie in Fig. 1 zu sehen ist - in der Wandlerkammer 3 erfolgen. Ebenso ist es möglich, dass die Kreuzung der Kapillaren hinter der Wandlerkammer 3 oder gemäß zweier Alternativen: teilweise in der Wandlerkammer 3 und teilweise im Zwischenraum oder teilweise in der Wandlerkammer 3 und teilweise im Messwerk 2 erfolgt.

Die Druckübertragung und die Begrenzung des Überdrucks auf ein Maß, durch das das drucksensitive Element 13 nicht beschädigt bzw. zerstört wird, arbeiten bei der gezeigten Ausgestaltung parallel, wobei druckdynamisch sichergestellt ist, dass der Überdruck PeÜL begrenzt ist, bevor er die Druckmesszelle 12 erreicht. Die Begrenzung des Überdrucks PeÜL erfolgt über eine entsprechend vorgegebene Vorspannung der Überlastmembranen 6a, 6b. Diese sind so vorgespannt, dass sie im normalen Messbetrieb näherungsweise vollflächig und formschlüssig an dem Gehäuse des Grundkörpers 9 anliegen und sich erst dann von dem Grundkörper 9 des Messwerks 2 bzw. des Prozessadapters 21 abheben, wenn der vorgegebener kritischer Grenzdruck überschritten wird. Bis zu diesem Grenzdruck ist eine Unversehrtheit des drucksensitiven Elements sichergestellt.

Im regulären Messbetrieb und im Anfangsstadium beim Auftreten eines Überdrucks PeÜL liegen - wie bereits gesagt - die Überlastmembranen 6a,6b am Grundkörper 9 des Messwerks 2 vollflächig an. Die Anlage ist weitgehend formschlüssig, die Überlastmembranen 6a, 6b sind entsprechend vorgespannt. Der Messdruck p1, p2 gelangt über die Trennmembranen 5a, 5b, die Druckkammern 7a, 7b, die Verbindungskapillaren 10a, 10b und die Hilfskapillaren 11a, 11b an die Rückseite der Zusatzdruckkammern 8a, 8b und parallel zu der Wandler-Kammer 3 bzw. zu dem drucksensitive Messelement 13.

Die Überlastmembranen 6a,6b und das Messelement 13 liegen hydraulisch parallel, es wirkt daher an beiden jeweils der gleiche Druck. An den Überlastmembranen 6a, 6b und dem Messelement 13 bildet sich der Differenzdruck dp aus p₁-p₂. Das drucksensitive Messelement 13 lenkt sich in Abhängigkeit von dem Differenzdruck aus. Da die Überlastmembranen 6a, 6b vorgespannt sind, wird ihre Auslenkung bis zu einem festgelegten Wert zwangsweise verhindert. Natürlich ist die Vorspannung auch größer als der Messbereich.

Das drucksensitive Messelement 13 erhält über die Druckkammer 7b und die Verbindungskapillaren 11b, 10a die Druckinformation für die Plusseite (+). Über die Druckkammer 7a und die Verbindungskapillaren 11a, 10b wird die Druckinformation für die Minusseite (-) des drucksensitiven Messelementes 13 übermittelt. Die Wirkung der Parallelpfade über die Zusatzdruckkammern 8a, 8b sind aufgrund der vorgespannten und der näherungsweisen formschlüssigen Auflage der Überlastmembranen 6a, 6b auf dem Grundkörper 9 des Messwerks 2 nahezu vernachlässigbar.

Im Überlastfall, also bei Auftreten eines einseitigen Überdrucks PeÜL auf der rechten Seite des Differenzdruckmessaufnehmers 1, steigt der Druck an der Trennmembran 5b und in der Druckkammer 7b an. Da die Überlastmembrane 6b am Grundkörper 9 anliegt, ist ein Druckanstieg in der Zusatzdruckkammer 8b nicht möglich. Der Druck gelangt über die Druckkammer 7b zur Verbindungskapillare 11b und wirkt über die Verbindungskapillare 10a auf die Plusseite (+) des drucksensitiven Messelementes 13; parallel wirkt er auch auf die vom Prozess abgewandte Rückseite der Überlastmembrane 6a. Überschreitet der Druck die Vorspannung der Überlastmembrane 6a, so wird diese ausgelenkt und die Zusatzdruckkammer 8a kann die Hydraulikflüssigkeit 16, üblicherweise ein Silikonöl, aufnehmen, welche aus der Druckkammer 7b verschoben wird. Der Druck in der Zusatzdruckkammer 8a und der nachfolgenden Druckkammer 7a steigt kontinuierlich an. Die Überlastmembrane 6a und die Trennmembrane 5a werden in Richtung des Prozesses ausgelenkt. Dieser Vorgang endet erst, wenn alles Öl 16 aus der Druckkammer 7b verschoben ist und die Trennmembrane 5b auf der sich am Grundkörper 9 des Messwerks 2 abstützenden Überlastmembrane 6b zur Anlage kommt. Sobald dieser Zustand erreicht ist, kann der Druck im Inneren des hydraulischen Systems nicht weiter ansteigen: Die Druckbegrenzung, d.h. der Überlastschutz, entfaltet seine Wirkung.

Über diese Befüllungsbohrungen 15a, 15b wird das Kapillarsystem des Differenzdruckmesssaufnehmers 1 mit Übertragungsflüssigkeit 16 befüllt. Die Befüllungsbohrungen 14a, 14b verlaufen seitlich im Prozessanschluss 21 bzw. im Messwerk 2. In den gezeigten Ausgestaltungen verlaufen die Befüllungsbohrungen 14a, 14b parallel zur Grundfläche des Prozessanschlusses 21. Die Lage ist so gewählt, dass das zum Befüllen benötigte Ölvolumen möglichst gering ist.

Aus diesem Grund sind die Verschlusselemente 15a, 15b auch möglichst nahe an den Kreuzungspunkten der Kapillaren 10a, 10b, 11a, 11b vorgesehen. Durch die Anordnung im Innenraum des Differenzdruckmessaufnehmers 1 sind die Befüllungsbohrungen 14a, 14b - hinter den Verschlusselementen 15a, 15b - korrosionsgeschützt. Weiterhin können die entsprechenden Bereiche der Befüllungsbohrungen 14a, 14b nach außen auch noch vergossen sein; dies ist jedoch aufgrund der vom Außenraum abgeschlossenen Lage der Befüllungsbohrungen 14a, 14b nicht unbedingt erforderlich.

Als druckdichter, gas- oder zumindest flüssigkeitsdichter Verschluss ist jeweils ein bevorzugt kugelförmiges Verschlusselement 15a, 15b vorgesehen, das in die Befüllungsbohrung 14a, 14b gedrückt und anschließend verstemmt wird. Prinzipiell stehen auch anderen Verfahrens zum Verschließen der Öffnungen der Befüllungsbohrungen 14a, 14b zur Verfügung. Schweißen wird allerdings insofern als kritisch angesehen, da infolge der Temperaturerhöhung negative Rückwirkungen auf die definierten Eigenschaften der Übertragungsflüssigkeit 16 auftreten können.

## Patentansprüche

1. Koplanarer Differenzdruckmessaufnehmer (1) mit einem Messwerk (2) mit zwei dem Prozess zugewandten Trennmembranen (5a, 5b) und einer Wandlerkammer (3), wobei an den Trennmembranen (5a, 5b) zwei Drücke (p1, p2) anliegen, die hydraulisch über ein entsprechendes Kapillarsystem (10a, 10b, 11a, 11b) zu einem drucksensitiven Messelements (13), das in der Wandlerkammer (3) angeordnet ist, übertragen werden, wobei das Messwerk (2) in seinem dem Prozess zugewandten Endbereich als Prozessanschlusses (21) für eine Hardware-Schnittstelle (23a, 23b) eines Kundenanschlusses (24a; 24b) ausgestaltet ist, wobei in der dem Prozess zugewandten Stirnfläche des Grundkörpers (9) des Prozessanschlusses (21) vor jeder der beiden Trennmembranen (5a, 5b) eine scheibenförmige Ausnehmung (17) vorgesehen ist, **dadurch gekennzeichnet, dass** jede der beiden scheibenförmigen Ausnehmungen (17) jeweils die Form von zwei sich in einer ellipsoiden Struktur schneidenden Kreisen mit unterschiedlichen Radien (Ra; Rb) aufweist, und wobei zwei zu den ellipsoiden scheibenförmigen Ausnehmungen (17) in Form und Dimensionen an die ellipsoiden scheibenförmigen Ausnehmungen angepasste Einlagescheiben (19a; 19b) mit einer Öffnung (26a; 26b), über die die Drücke (p1, p2) zu den Trennmembranen (5a, 5b) gelangen, vorgesehen sind, die in den ellipsoiden scheibenförmigen Ausnehmungen (17) montierbar sind und die so ausgestaltet sind, dass der Prozessanschluss (21) an die Hardware-Schnittstelle (23a; 23b) des Kundenanschlusses (24a; 24b) anpassbar ist.

2. Koplanarer Differenzdruckmessaufnehmer nach Anspruch 1,
wobei zumindest zwei Paare von unterschiedlichen Einlagescheiben (19a, 19b) vorgesehen sind, die so ausgestaltet sind, dass der Prozessanschluss (21) an zumindest zwei unterschiedliche Hardware-Schnittstellen (23a, 23b) , insbesondere an zumindest zwei unterschiedliche Standard-Hardware-Schnittstellen, von entsprechenden Kundenanschlüssen (24a, 24b) montierbar ist.

3. Koplanarer Differenzdruckmessaufnehmer nach Anspruch 1 oder 2,
wobei die ellipsoiden scheibenförmigen Ausnehmungen (17) und die korrespondierenden Einlagescheiben (19a; 19b) so dimensioniert sind, dass die umlaufenden Schweißnahten (25) zur Montage der Einlagescheiben (19a; 19b) in den ellipsoiden scheibenförmigen Ausnehmungen (17) außerhalb der Trennmembranen (5a, 5b) liegen.

4. Koplanarer Differenzdruckmessaufnehmer nach einem oder mehreren der vorhergehenden Ansprüche,
wobei die beiden ellipsoiden scheibenförmigen Ausnehmungen (17) vollsymmetrisch zueinander angeordnet sind.

5. Koplanarer Differenzdruckmessaufnehmer nach einem oder mehreren der vorhergehenden Ansprüche,
wobei die beiden ellipsoiden scheibenförmigen Ausnehmungen (17) so angeordnet sind, dass sie mit den beiden größer dimensionierten Radien (Ra) nebeneinander liegen, während sie mit den beiden kleiner dimensionierten Radien (Rb) zu zwei gegenüberliegenden Außenkanten des Prozessanschlusses (22) ausgerichtet sind.

6. Koplanarer Differenzdruckmessaufnehmer nach einem oder mehreren der vorhergehenden Ansprüche,
wobei sich bei zwei zu einer ersten Hardware-Schnittstelle (23a) korrespondierenden Einlagescheiben (19a) die bevorzugt kreisförmige Öffnung (26a) jeweils im Bereich des größer dimensionierten Radius' (Ra) befindet.

7. Koplanarer Differenzdruckmessaufnehmer nach Anspruch 6,
wobei um jede der beiden kreisförmige Öffnung (26a) eine umlaufende, ringförmige Nut (20) angeordnet ist.

8. Koplanarer Differenzdruckmessaufnehmer nach einem oder mehreren der Ansprüche 1-5, wobei sich bei zwei zu einer ersten Hardware-Schnittstelle (23b) korrespondierenden Einlagescheiben (19b) die bevorzugt kreisförmige Öffnung (26b) jeweils im Bereich des kleiner dimensionierten Radius' (Rb) befindet.

## Claims

1. A coplanar differential pressure transmitter (1) with a measuring mechanism (2) with two separating membranes (5a, 5b) facing toward the process and a transducer chamber (3), wherein there are two pressures (p1, p2) at the separating membranes (5a, 5b), which are hydraulically transmitted via a corresponding capillary system (10a, 10b, 11a, 11b) to a pressure-sensitive measuring element (13) which is arranged in the transducer chamber (3), wherein the measuring mechanism (2), in its end area facing toward the process, is configured as a process connection (21) for a hardware interface (23a, 23b) of a customer connection (24a; 24b), wherein a disk-shaped recess (17) is provided in the end face of the basic body (9) of the process connection (21) facing toward the process in front of each of the two separating membranes (5a, 5b), **characterized in that** each of the two disk-shaped recesses (17) in each case has the form of two circles intersecting each other in an ellipsoidal structure with different radii (Ra; Rb),
and wherein two plates (19a; 19b) intended for the ellipsoidal disk-shaped recesses (17) with a shape and dimensions adapted to the ellipsoidal disk-shaped recesses are provided with an opening (26a; 26b) via which the pressures (p1, p2) reach the separating membranes (5a, 5b), and said plates can be installed in the ellipsoidal disk-shaped recesses (17) and are configured in such a way that the process connection (21) can be adapted to the hardware interface (23a; 23b) of the customer connection (24a; 24b).

2. The coplanar differential pressure transmitter as claimed in claim 1,
wherein at least two pairs of different plates (19a, 19b) are provided, which are configured in such a way that the process connection (21) can be installed at at least two different hardware interfaces (23a, 23b), in particular at at least two different standard hardware interfaces of corresponding customer connections (24a, 24b).

3. The coplanar differential pressure transmitter as claimed in claim 1 or 2,
wherein the ellipsoidal disk-shaped recesses (17) and the corresponding plates (19a; 19b) are dimensioned in such a way that the circumferential welded seams (25) for installing the plates (19a; 19b) in the ellipsoidal disk-shaped recesses (17) are located outside the separating membranes (5a, 5b).

4. The coplanar differential pressure transmitter as claimed in one or more of the preceding claims,
wherein the two ellipsoidal disk-shaped recesses (17) are arranged to be completely symmetrical with each other.

5. The coplanar differential pressure transmitter as claimed in one or more of the preceding claims,
wherein the two ellipsoidal disk-shaped recesses (17) with the two larger radii (Ra) are arranged next to each other, while the ones with the two smaller radii (Rb) are aligned with two opposite outer edges of the process connection (22).

6. The coplanar differential pressure transmitter as claimed in one or more of the preceding claims,
wherein, if there are two plates (19a) corresponding to a first hardware interface (23a), the preferably circular opening (26a) is in each case located in the area of the larger radius (Ra).

7. The coplanar differential pressure transmitter as claimed in claim 6,
wherein a circumferential annular groove (20) is arranged around the outside of each of the two circular openings (26a).

8. The coplanar differential pressure transmitter as claimed in one or more of claims 1 to 5,
wherein, if there are two plates (19b) corresponding to a first hardware interface (23b), the preferably circular opening (26b) is in each case located in the area of the smaller radius (Rb).

## Revendications

1. Capteur de pression différentielle coplanaire (1) comprenant un mécanisme de mesure (2) avec deux membranes de séparation (5a, 5b) tournées vers le process et une chambre de transducteur (3), deux pressions (p1, p2) étant appliquées aux membranes de séparation (5a, 5b), lesquelles pressions sont transmises par voie hydraulique via un système capillaire correspondant (10a, 10b, 11a, 11b) à un élément de mesure (13) sensible à la pression, lequel élément est disposé dans la chambre de transducteur (3), le mécanisme de mesure (2) étant conçu dans sa zone d'extrémité tournée vers le process comme un raccord process (21) pour une interface matérielle (23a, 23b) d'un raccord client (24a ; 24b), un évidement en forme de disque (17) étant prévu dans la surface frontale du corps de base (9) du raccord process (21) tournée vers le process, devant chacune des deux membranes de séparation (5a, 5b), **caractérisé en ce que** chacun des deux évidements en forme de disque (17) présente respectivement la forme de deux cercles se coupant dans une structure ellipsoïdale avec des rayons différents (Ra ; Rb),
et deux disques d'insertion (19a ; 19b) adaptés en termes de forme et de dimensions aux évidements ellipsoïdaux en forme de disque (17) étant prévus avec une ouverture (26a ; 26b) par laquelle les pressions (p1, p2) parviennent aux membranes de séparation (5a, 5b), lesquelles membranes peuvent être montées dans les évidements ellipsoïdaux en forme de disque (17) et lesquelles membranes sont conçues de telle sorte que le raccord process (21) peut être adapté à l'interface matérielle (23a ; 23b) du raccord client (24a ; 24b).

2. Capteur de pression différentielle coplanaire selon la revendication 1,
pour lequel au moins deux paires de disques d'insertion (19a, 19b) différents sont prévues, lesquelles paires sont conçues de telle sorte que le raccord process (21) puisse être monté sur au moins deux interfaces matérielles différentes (23a, 23b), notamment sur au moins deux interfaces matérielles standard différentes, à partir de raccords clients correspondants (24a, 24b).

3. Capteur de pression différentielle coplanaire selon la revendication 1 o u2,
pour lequel les évidements ellipsoïdaux en forme de disque (17) et les disques d'insertion (19a ; 19b) correspondants sont dimensionnés de telle sorte que les cordons de soudure périphériques (25) destinés au montage des disques d'insertion (19a ; 19b) dans les évidements ellipsoïdaux en forme de disque (17) se trouvent à l'extérieur des membranes de séparation (5a, 5b).

4. Capteur de pression différentielle coplanaire selon l'une ou plusieurs des revendications précédentes,
pour lequel les deux évidements ellipsoïdaux en forme de disque (17) sont disposés de manière entièrement symétrique l'un par rapport à l'autre.

5. Capteur de pression différentielle coplanaire selon l'une ou plusieurs des revendications précédentes,
pour lequel les deux évidements ellipsoïdaux en forme de disque (17) sont disposés de manière à être juxtaposés avec les deux rayons de plus grande dimension (Ra), tandis qu'avec les deux rayons de plus petite dimension (Rb), lesdits évidements sont alignés par rapport à deux bords extérieurs opposés du raccord process (22).

6. Capteur de pression différentielle coplanaire selon l'une ou plusieurs des revendications précédentes,
pour lequel, dans le cas de deux disques d'insertion (19a) correspondant à une première interface matérielle (23a), l'ouverture (26a), de préférence circulaire, se trouve respectivement dans la zone du rayon (Ra) de plus grande dimension.

7. Capteur de pression différentielle coplanaire selon la revendication 6,
pour lequel une rainure annulaire périphérique (20) est disposée autour de chacune des deux ouvertures circulaires (26a).

8. Capteur de pression différentielle coplanaire selon l'une ou plusieurs des revendications 1 à 5,
pour lequel, dans le cas de deux disques d'insertion (19b) correspondant à une première interface matérielle (23b), l'ouverture (26b), de préférence circulaire, se trouve respectivement dans la zone du rayon (Rb) de plus petite dimension.
